# NEUE EUROPÄISCHE PATENTSCHRIFT

(11) **EP 1 040 295 B2**
(45) Veröffentlichungstag und Bekanntmachung des Hinweises auf die Entscheidung über den Einspruch: **08.10.2008**
(45) Hinweis auf die Patenterteilung: 08.01.2003
(21) Anmeldenummer: 98961134.8
(22) Anmeldetag: 04.11.1998
(51) Int. Cl.: F21S 2/00, F21V 17/00

(54) **DECKENANBAULEUCHTE MIT EINEM SCHEIBENFÖRMIGEN LICHTLEITER**
CEILING LIGHT WITH A PANEL-SHAPED LIGHT GUIDE
LUMINAIRE DE PLAFOND A GUIDE DE LUMIERE EN FORME DE PLAQUE

(30) Priorität: 15.12.1997 DE 19755658
(43) Veröffentlichungstag der Anmeldung: 04.10.2000
(73) Patentinhaber: Zumtobel Lighting GmbH, 6850 Dornbirn (AT)
(72) Erfinder: RHOMBERG, Ulrich, A-6850 Dornbirn (AT)
(74) Vertreter: Mitscherlich, Hans
(86) Internationale Anmeldenummer: PCT/EP1998/007035
(87) Internationale Veröffentlichungsnummer: WO 1999/031430

(56) Entgegenhaltungen:
- EP-A1- 0 846 915
- WO-A-89/02606
- DE-A- 19 541 971
- DE-A1- 4 205 137
- DE-U1- 8 310 852
- DE-U1- 29 706 568
- GB-A- 2 161 638
- GB-A- 2 241 056

## Beschreibung

Die Erfindung betrifft eine Deckenanbauleuchte mit einem scheibenförmigen Lichtleiter, in den das Licht von einer Lichtquelle eingestrahlt wird, die sich an einer Schmalseite des Lichtleiters befindet, und der auf wenigstens einem Teilbereich seiner einen Breitseite einen Lichtausgang für das abstrahlende Licht aufweist. Der Lichtausgang kann durch eine das Licht auskoppelnde Schicht mit einer Mikrostruktur gebildet sein. Eine solche Leuchte ist aus der WO 96/21122 A1 bekannt. In dieser Druckschrift ist die Leuchte hauptsächlich hinsichtlich der Lichtauskopplung beschrieben.

Eine Leuchte dieser Art zeichnet sich durch eine niedrige Bauhöhe aus. Außerdem lassen sich durch besondere Ausbildungen der das Licht aus dem Lichtleiter auskoppelnden Schicht besondere Eigenschaften des Lichtes erreichen, z.B. eine entblendete Lichtabstrahlung, so daß besondere Entblendungsvorrichtungen wie z.B. Raster nicht erforderlich sind, und was ebenfalls zur Verringerung der Bauhöhe beiträgt.

Aus der DE 195 41 971 A1 ist eine vertikal ausgerichtete Leuchttafel bekannt, die eine kantenbeleuchtete Leuchtscheibe aufweist, welche zwischen zwei im wesentlichen senkrecht zu den beiden Seitenflächen der Leuchtscheibe ausgerichteten Stegen gehalten sind. Die Leuchttafel ist durch sich von den Stegen nach unten erstreckenden Fußteilen auf den Boden frei aufstellbar.

Der Erfindung liegt die Aufgabe zugrunde, bei Gewährleistung der flachen Bauweise eine einfache Bauweise für eine Halterung des Lichtleiters und der Reflektoranordnung an einem Leuchtenträger zu finden. Diese Aufgabe wird durch eine Deckenanbauleuchte mit den Merkmalen des Anspruchs 1 gelöst.

Bei der erfindungsgemäßen Ausgestaltung bilden der Leuchtenträger und die Reflektoranordnung eine Baueinheit, in der der Lichtleiter bei Gewährleistung einer vorteilhaften Lichteinstrahlung und -abstrahlung sich in einfacher Weise und sicher halten läßt. Dabei ist es besonders vorteilhaft, die die Tragelemente zum Halten des Lichtleiters aufweisenden Tragteile in ein und derselben Höhe mit dem Lichtleiter anzuordnen, wodurch sich nicht nur eine niedrige Bauweise ergibt, sondern wodurch auch eine optimale Abstrahlung des Lichts vom Lichtleiter und Raumausleuchtung erreicht wird.

Gemäß einer Weiterbildung der Erfindung ist zur Verbindung der Reflektoranordnung oder des Reflektors mit dem Leuchtenträger wenigstens eine Steckverbindung vorgesehen, die sich in einfacher und kleiner Bauweise realisieren läßt und in die Leuchtenkonstruktion integrieren läßt und außerdem eine einfache und schnelle Montage bzw. Demontage gewährleistet. Zur Sicherung der Steckfassung gegen ein unbeabsichtigtes Lösen ist eine Sicherungsvorrichtung vorgesehen. Hierbei kann es sich um eine Sicherungsschraube handeln, die in die Wandung der Steckausnehmung von außen eingeschraubt ist und mit der der Steckzapfen in der Steckausnehmung positionierbar ist. Die Sicherungsvorrichtung kann auch durch eine Klemmvorrichtung gebildet sein, die eine schwergängige Fassung für den Steckzapfen in der Steckausnehmung im Endbereich seiner Einsteckbewegung umfaßt.

Die erfindungsgemäße Deckenanbauleuchte zeichnet sich auch dadurch aus, daß sie die an eine Deckenanbauleuchte gestellten mechanischen, lichttechnischen und ästhetischen Anforderungen erfüllt.

In den Unteransprüchen sind Merkmale enthalten, die zu einer einfachen und ansehnlichen Bauweise beitragen, eine verdeckte Anordnung von zugehörigen Betriebsmitteln einschließlich zugehöriger elektrischer Leitungen ermöglichen, die Halterung des Lichtleiters am Leuchtenträger vereinfachen und verbessern und außerdem die Einstrahlung des von der Lichtquelle abstrahlenden Lichts in den Lichtleiter gegebenenfalls bei Gewährleistung einer indirekten Beleuchtung verbessern.

Nachfolgen werden die Erfindung und weitere durch sie erzielbare Vorteile anhand von bevorzugten Ausführungsbeispielen und vereinfachten Zeichnungen näher erläutert. Es zeigen
- Fig. 1: eine erfindungsgemäße Leuchte in perspektivischer Unteransicht;
- Fig. 2: die Leuchte in perspektivischer Draufsicht;
- Fig. 3: eine erfindungsgemäße Leuchte in abgewandelter Ausgestaltung in perspektivischer Unteransicht;
- Fig. 4: die Leuchte nach Fig. 3 in perspektivischer Draufsicht;
- Fig. 5: einen Endabschnitt der Leuchte nach Fig. 1 und 2 in der Draufsicht;
- Fig. 6: die Leuchte nach Fig. 1 und 2 in der Stirnansicht;
- Fig. 7: den Endabschnitt nach Fig. 5 in der Seitenansicht;
- Fig. 8: den Schnitt VIII-VIII in Fig. 5;
- Fig. 9: den Schnitt IX-IX in Fig. 5;
- Fig. 10: den Schnit X-X in Fig. 5.

Die Hauptteile der allgemein mit 1 bezeichneten Leuchte sind ein Leuchtenträger 2, ein scheibenförmiger Lichtleiter 3, eine bezüglich des Lichtleiters 3 stirnseitig angeordnete, insbesondere längliche Lichtquelle 4, insbesondere eine Lampe, die vorzugsweise durch eine Leuchtstoffröhre 4a gebildet ist, wenigstens eine Reflektoranordnung 5, die an der Schmalseite angeordnet ist, an der sich die Lichtquelle 4 befindet, eine erste Haltevorrichtung 6, zum Halten der Leuchte 1 an einem nicht dargestellten Träger, z.B. an einer Raumdecke, einer lösbaren zweiten Haltevorrichtung zum Halten des Lichtleiters 3 am Leuchtenträger 2, eine dritte Haltevorrichtung 8 zum lösbaren Halten der Reflektoranordnung 5 am Leuchtenträger 2 und zugehörige, nicht dargestellte Betriebsmittel wie elektrischen Anschlußteilen und z.B. einem Vorschaltgerät.

Der Lichtleiter 3 ist durch eine Platte mit zu ihren Breitseiten vorzugsweise rechtwinklig angeordneten Schmalseiten und aus lichtdurchlässigem Material wie z.B. Glas oder Kunststoff gebildet. Die Platte weist an wenigstens einer Schmalseite einen Lichteingang 9 und an wenigstens einer Breitseite einen Lichtausgang 11 auf, der sich über einen Teilbereich oder über den gesamten Bereich dieser Breitseite erstrecken kann und von dem die Hauptabstrahlungsrichtung zur Beleuchtung des Raumes ausgeht. Die den Lichteingang 9 aufweisende Schmalseite erstreckt sich vorzugsweise gerade und eben. Dies gilt auch für die übrigen Seiten des scheibenförmigen Lichtleiters 3. Die quer zur Breitseite sichtbare Form des Lichtleiters 3 ist nicht auf eine bestimmte Form beschränkt. Vorzugsweise weist der Lichtleiter 3 eine quadratische oder bei einer länglichen Leuchte 1 eine rechteckige Form auf.

Im Bereich des Lichteingangs 9 ist die zugehörige Oberfläche des Lichtleiters lichtdurchlässig. Dies ist auch im Bereich des Lichtausgangs 11 der Fall, wobei die zugehörige Oberfläche hier je nach Ausgestaltung und Verwendung der Leuchte 1 teillichtdurchlässig sein kann. Bei der vorliegenden Ausgestaltung weist die Oberfläche im Bereich des Lichtausgangs 11 eine Licht auskoppelnde Mikrostruktur auf, die vereinfacht als Lichtausgangsschicht 13 dargestellt ist. An der dem Lichtausgang 11 gegenüberliegenden Breitseite kann die zugehörige Oberfläche des Lichtleiters 3 lichtundurchlässig sein. Dies kann durch Totalreflexion oder z.B. durch eine Reflexionsschicht auf dieser Breitseite erreicht werden. An den übrigen Schmalseiten des Lichtleiters kann je nach Bauweise und gewünschtem Lichtaustritt die zugehörige Oberfläche lichtdurchlässig oder lichtundurchlässig sein, was z.B. ebenfalls durch eine Beschichtung mit einer Reflexionsschicht erreichbar ist.

Beim vorliegenden Ausführungsbeispiel ist die Leuchte 1 eine Deckenleuchte, wobei der Lichtleiter 3 horizontal angeordnet ist und der Lichtausgang 11 an der unteren Breitseite 14 angeordnet ist, so daß das Licht zur Direktbeleuchtung des Raumes nach unten austritt. Die erfindungsgemäße Leuchte eignet sich jedoch auch für andere Gebrauchsanordnungen, z.B. als Wandleuchte, wobei ihre Position im Raum entsprechend verdreht ist.

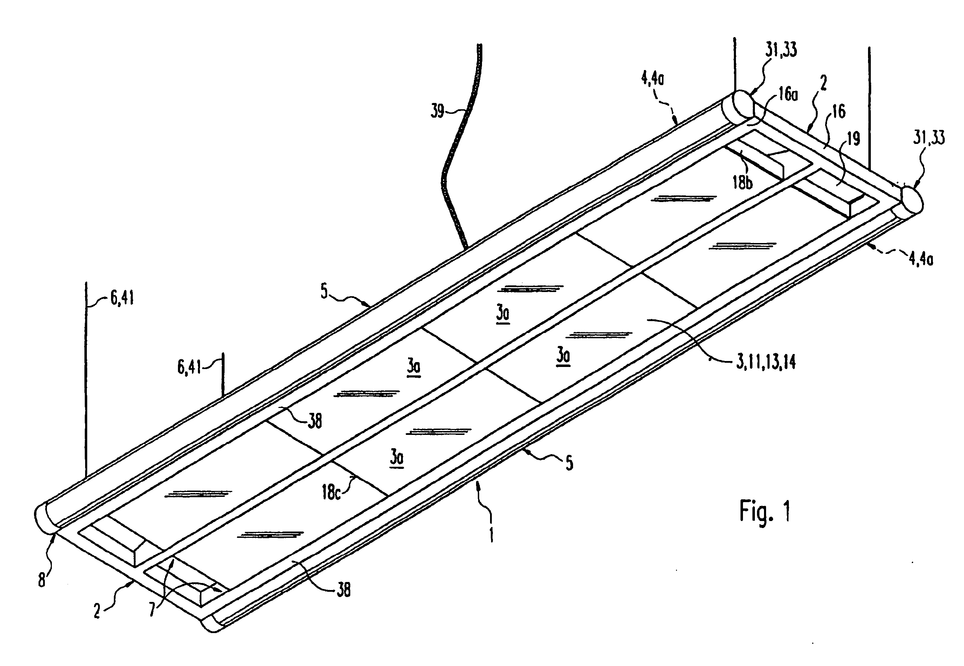

Insbesondere bei breiten oder langen Baugrößen ist es auch möglich, den Lichtleiter 3 aus mehreren Segmenten zusammenzusetzen. Bei den vorliegenden Ausführungsbeispielen handelt es sich um eine Leuchte 1 in länglicher Bauweise, wobei der Lichtleiter 3 in der Längsrichtung oder bei entsprechender Breite auch in der Querrichtung aus mehreren Lichtleitersegmenten 3a, hier quadratischer oder rechteckiger Form, bestehen kann. Beim Ausführungsbeispiel gemäß Fig. 1, 2 und 6 bis 10 sind in der Längsrichtung mehr als zwei, z.B. vier Lichtleitersegmente 3a hintereinander und in der Querrichtung zwei Lichtleitersegmente 3a nebeneinander angeordnet.

Die Leuchte 1 ist bezüglich der längs und quer verlaufenden vertikalen Mittelebenen symmetrisch ausgebildet.

Der Leuchtenträger 2 besteht aus einem sich in der Längsrichtung erstreckenden und mittig angeordneten Längsbügel 15, der an seinen Enden verjüngt sein kann und vorzugsweise einstückig mit jeweils einem Querbügel 16 verbunden ist, hier mit dessen Innenseite. Von den freien Enden der Querbügel 16 ragt an jeder Längsseite jeweils ein Querbügelteil 16a in der Längsrichtung zurück, wodurch sich für das stirnseitige Ende des Leuchtenträgers 2 jeweils eine E-Form ergibt. Vom unteren Endbereich des inneren Endes jedes Tragbügelteils 16a ragt in der Längsrichtung eine dünne Tragplatte 16b vor, die das zugehörige Lichtleitersegment 3a untergreift. Die innere Stirnfläche 16c des Querbügelteils 16a bildet eine stirnseitige Begrenzung für das Lichtleiterteil 3a. Der Abstand a zwischen den einander längs gegenüberliegenden inneren Stirnflächen 16c ist so an die Länge L der Lichtleitersegmente 13a bzw. des Lichtleiters 13 angepaßt, daß diese mit geringem Bewegungsspiel dazwischen passen. An den Außenseiten der Tragbügelteile 16a ist jeweils eine Fassung 17 für die sich in einem geringen seitlichen Abstand von der längsseitigen Schmalseite 18 des Lichtleiters 3 erstreckende Leuchtstoffröhre 2a befestigt. Bezüglich der zugehörigen inneren Stirnfläche 16c ist die Steckfassung 17 jeweils nach außen versetzt, so daß eine Leuchtstoffröhre 2a vorhanden ist, deren Länge größer ist, als die Längsabmessung L des Lichtleiters 3, und die Lichtabstrahlung der Leuchtstoffröhre 2a auf der ganzen Länge L in die Schmalseite 18 einstrahlbar ist. Aus diesen Gründen ist es auch vorteilhaft, die Tragelemente 16b nicht an den Schmalseiten 18 des Lichteingangs 9 sondern an den anderen, hier kurzen Schmalseiten 18b des Lichtleiters 3 anzuordnen. Da die Querarmteile 16b und die Tragplatten 16c bezüglich des Lichtleiters 3 sich von der Stirnseite her und am äußeren Rand des Lichtleiters 3 erstrecken, wird der Lichteingang 9 durch diese Teile nicht beeinträchtigt.

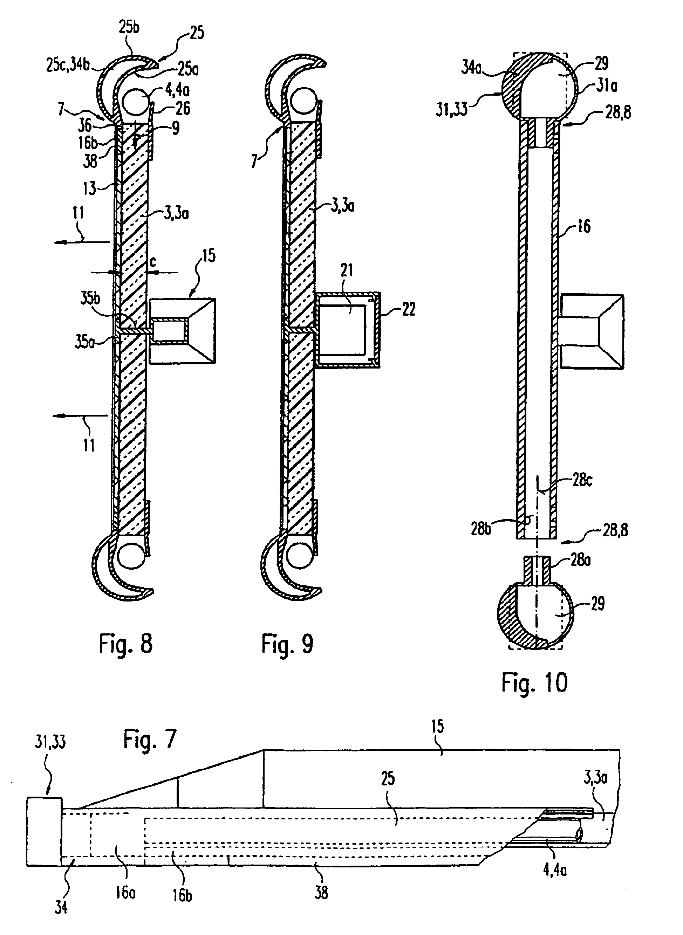

Vorzugsweise ist der Längsbügel 15 länger bemessen, als der Lichtleiter 3, so daß sich zwischen dessen kurzen Schmalseite und dem Querbügel 16 ein Abstand b und somit ein freies Feld 19 befindet. Eine nur in Fig. 9 andeutungsweise dargestellte elektrische Anschlußvorrichtung mit zugehörigen Betriebsmitteln 21, wie z.B. einem Vorschaltgerät, können in dem vorzugsweise als Hohl- oder U-Körper ausgebildeten Längsträger 15 angeordnet sein, wobei der Längsbügel 15 zumindest im Bereich der Betriebsmittel 21 durch einen Deckel 22 abgedeckt sein kann, der durch nicht dargestellte Befestigungsmittel auf den Stegen des Längsträgers 15 befestigbar ist, z.B. mittels einer Verrastungsvorrichtung.

Die Reflektoranordnung 5 dient dazu, daß von der Lichtquelle 2 nicht direkt eingestrahlte Licht wenigstens teilweise zu reflektieren und in den Lichteingang 9 einzustrahlen. Dabei kann die Reflektoranordnung 5 einen Reflektor aufweisen, der die Lichtquelle 2 abgesehen von der langen Schmalseite 18 umgibt. Bei den vorliegenden Ausgestaltungen weist die Reflektoranordnung 5 einen Hauptreflektor 25 auf, der die Lichtquelle 4 unterseitig und außenseitig vorzugsweise mondsichelförmig umgibt, wobei die Lichtquelle 4 oberseitig offen ist und das in diesem Bereich nach oben abgestrahlte Licht indirekt zur Beleuchtung des Raumes beiträgt. Zusätzlich kann die Reflektoranordnung 5 einen Zusatzreflektor 26 aufweisen, der sich über der Lichtquelle 4 im dem Lichtleiter 3 nahen Bereich angeordnet ist und sich seitlich z.B bis. in den mittleren Bereich der Lichtquelle 4 erstrecken kann. Bei der vorliegenden Ausgestaltung ist der Zusatzreflektor 26 durch eine Leiste gebildet, die länger ist als der Lichtleiter 3, beide zugehörigen Querbügelteile etwas überragt und in diesem Bereich durch eine Schraube 27 mit dem Querbügelteil 16a verschraubt ist, wobei sie innenseitig mit der zugehörigen, längs gerichteten Innenseite des Querbügelteils 16b abschließen kann.

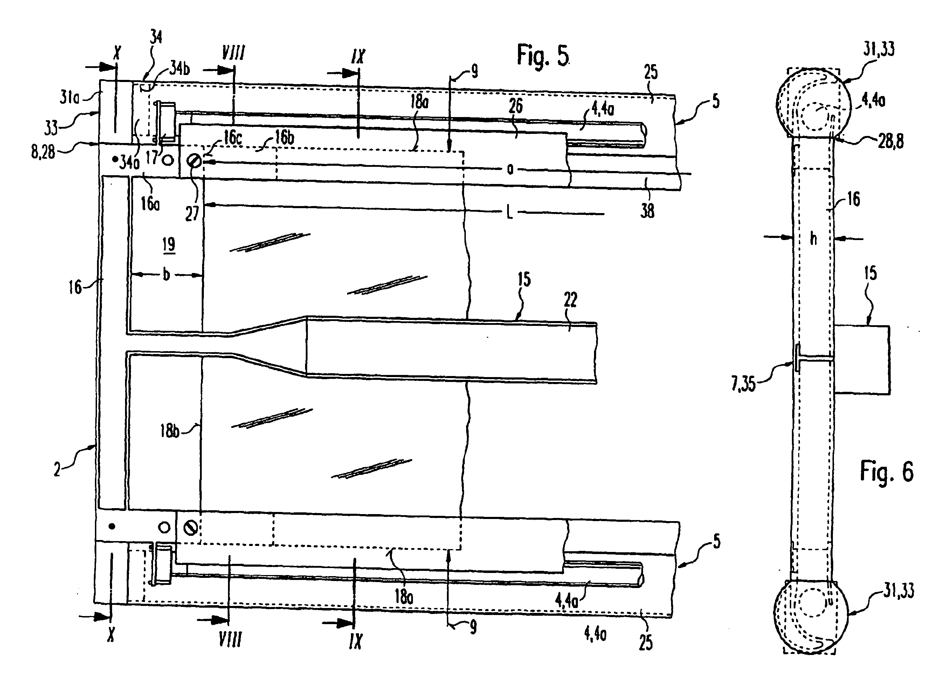

Die Haltevorrichtung 8 für den Hauptreflektor 25 ist vorzugsweise eine Steckverbindung 28, mit der der Hauptreflektor 25 durch Zusammenstecken mittelbar oder unmittelbar mit dem Leuchtenträger 2, hier mit den Querbügelteilen 16a, verbindbar ist. Bei der vorliegenden Ausgestaltung ist in jedem Endbereich eine Steckverbindung 28 mit einem Steckzapfen 28a und einer Steckausnehmung 28b vorgesehen, in die der Steckzapfen 28a einsteckbar und durch eine Sicherungsvorrichtung gegen unbeabsichtigtes Herausziehen sicherbar ist, z.B. dadurch, daß der Steckzapfen 28a im Endbereich seiner Einsteckbewegung unter Klemmwirkung in die Steckausnehmung 28b paßt. Die Mittelachsen 28c der Steckverbindungen 28 sind quer zur Längsrichtung des Hauptreflektors 25 gerichtet und verlaufen vorzugsweise horizontal, so daß der Hauptreflektor 25 seitlich in die Steckverbindung 28 einsteckbar und wieder herausziehbar ist. Die Steckausnehmungen 28b können durch den freien Innenraum der vorzugsweise rohrförmigen oder im Querschnitt U-förmigen und insbesondere oberseitig offenen Querbügelteile 16a gebildet sein, in die die Steckzapfen 28a einsteckbar sind. Es ist vorteilhaft, an den Enden des Hauptreflektor 25 Stirnwände 29 anzuordnen, die nicht nur für den Hauptreflektor 25 sondern auch für den zugehörigen Querbügel 16 Endverkleidungen bilden. Bei der vorliegenden Ausgestaltung ist der Hauptreflektor 25 bezüglich der Unterseite der Querbügel 16 etwas nach unten versetzt. Dabei ist es vorteilhaft, die Stirnwände 29 an die Querschnittsform des Hauptreflektors 25 anzupassen, wobei die Form der Stirnwand 29 entsprechend der Außenform des Hauptreflektors 25 gerundet oder viereckig (in Fig. 6 und 10 gestrichelt angedeutet) ausgebildet sein kann und zur Verbesserung der Ansehnlichkeit das Querbügelteil 16a nicht nur unterseitig sondern auch oberseitig überragen kann. Hierdurch erhält die Leuchte bei stirnseitiger Betrachtung die Form eines flachen Körpers mit längsseitigen gleich hohen oder verdickten Randstangen 31 runder oder viereckiger oder quadratischer oder rechteckiger Querschnittsform. Dabei ist es im weiteren vorteilhaft, am oberen Rand der Stirnwände in der Längsrichtung nach innen vorragende Deckenwandabschnitte 31a anzuordnen, insbesondere anteilig anzuformen, deren Breite an die Breite der Querbügel 16 angepaßt sein kann.

Es ist zwecks Vereinfachung der Bauweise sowie Herstellung und Verringerung der Herstellungskosten vorteilhaft, die die Steckverbindungen 28 aufweisenden Endabschnitte des Reflektors 25 mit der Stirnwand 29 als separate Endkappen 33 auszubilden und eine Steckverbindung 34 mit einem Steckzapfen 34a und einer Steckausnehmung 34b dazwischen vorzusehen. Die Mittelachse der Steckverbindungen 34 ist in der Längsrichtung des Hauptreflektors 25 gerichtet. Diese Ausgestaltung ermöglicht es, den Hauptreflektor 25 ohne Endkappen 33 als Profil herzustellen z.B. als kostengünstiges Strangpreßprofil.

Beim vorliegenden Ausführungsbeispiel ist der Hauptreflektor 25 durch ein mondsichelförmiges Hohlprofil gebildet mit einer konkaven kreisbogenförmig gekrümmten Innenwand 25a und einer kreisbogenförmig konvex gekrümmten Außenwand 25b, wobei dazwischen ein mondsichelförmiger Hohlraum 25c vorgesehen ist, der endseitig jeweils die Steckausnehmung 34b bildet, in die der Steckzapfen 34a entsprechender mondsichelförmiger Querschnittsform einsteckbar ist. Für eine Montage des Hauptreflektors 25 sind zunächst die Endkappen 33 mit dem Hauptreflektor 25 durch Zusammenstecken der Steckverbindungen 34 zu verbinden. Dann können die Endkappen 33 mit dem Hauptreflektor 25 durch ein Zusammenstecken in den Steckverbindungen 28 an den Leuchtenträger 2 anmontiert werden.

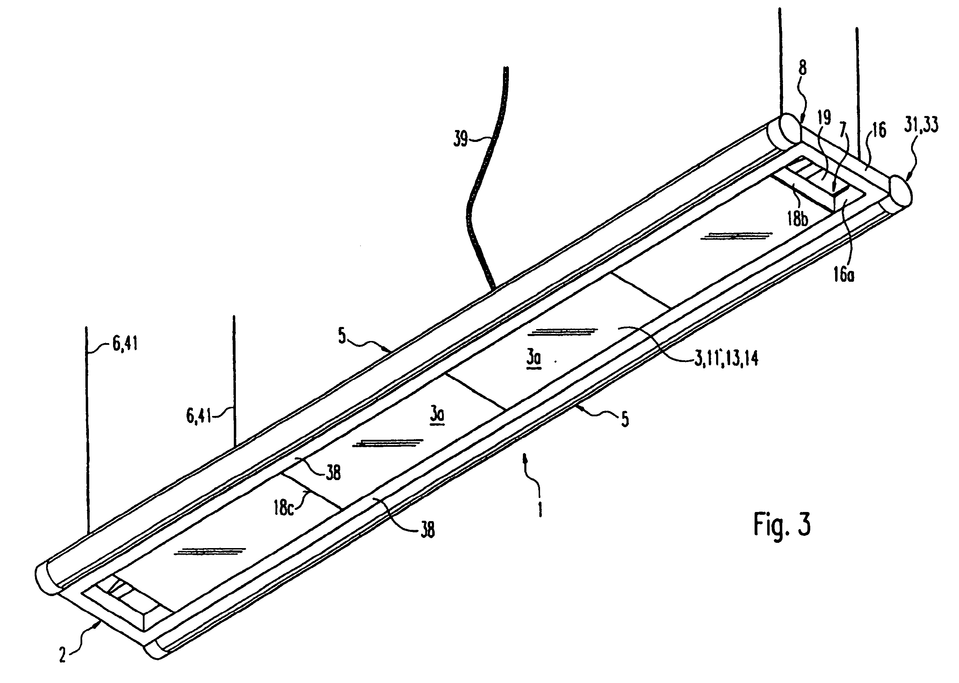

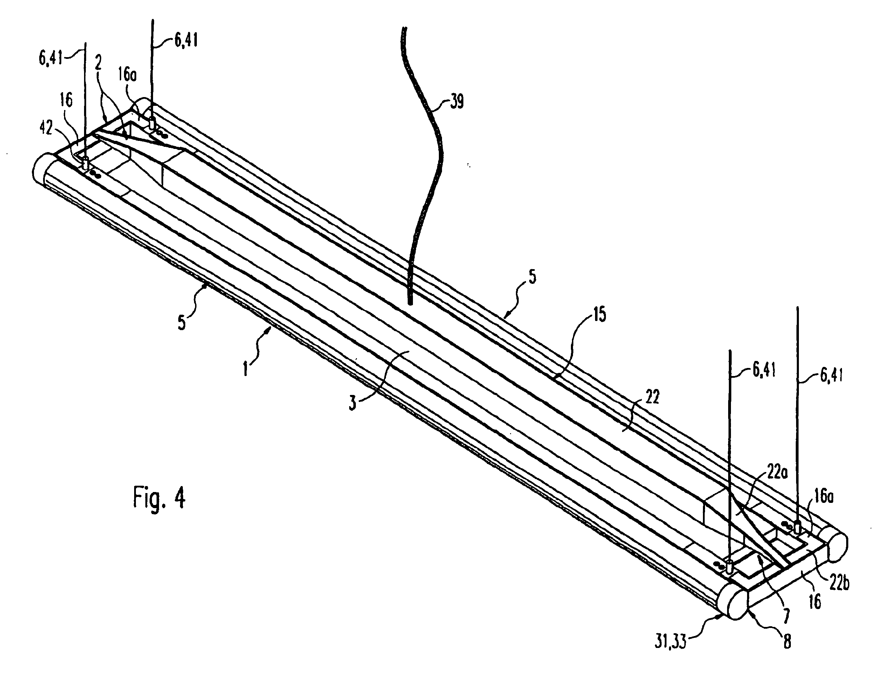

Beim Ausrührungsbeispiel gemäß den Fig. 1 und 2 sowie 6 bis 10, bei dem die Leuchte 1 bzw. der Leuchtenträger 2 eine größere Breite aufweist als beim Ausführungsbeispiel nach Fig. 3 und 4 ist an der Unterseite des Längsbügels 15 eine Tragleiste 35 in der Querschnittsform eines auf dem Kopf stehenden T befestigt, deren vertikaler Abstand vom Tragbügel 15 mit geringem Bewegungsspiel größer ist, als die Dicke c des Lichtleiters 3 bzw. der Lichtleitersegmente 3a und diese dazwischen passen. Dabei ist die Lichtauskopplungsschicht 13 nur zwischen den Tragschenkeln 35a und den Tragplatten 16b angeordnet, so daß sie sich dazwischen befindet und die Lichtleitersegmente 3a mit ihren ohne die Lichtauskopplungsschicht 13 ausgebildeten Längsrandbereichen auf den Tragplatten 16b und Tragschenkeln 35a aufliegen, wie es insbesondere aus den Fig. 8 und 9 zu entnehmen ist. Dabei können die Lichtleitersegmente 3a mit ihren äußeren Rändern auf einem inneren Steg 36 des Hauptreflektors 25 direkt aufliegen, wie es die Fig. 8 und 9 ebenfalls zeigen. Dadurch, daß sich die Lichtauskopplungsschicht 13 zwischen den Tragplatten 16b und den Tragschenkeln 35a befindet, ist auch eine formschlüssige Positionierung des Lichtleiters 3 bzw. der Lichtleitersegmente 3a quer zur Längsrichtung der Leuchte 1 gegeben. Diese Positioniervorrichtung gewährleistet eine mittige Position der Lichtleitersegmente 3 zwischen den Lichtquellen 4, wodurch gegebenenfalls in Verbindung mit dem eine Deckleiste bildenden Zusatzreflektor 26 die Haltevorrichtung 7 gebildet ist. Wie insbesondere aus den Fig. 5, 9 und 10 zu entnehmen ist, weist der Hauptreflektor 25 an seinem Innenrand einen vom Steg 36 nach innen abstehenden verjüngten Randschenkel 38 auf, der die etwas höher als die Unterseiten der Querbügelteile 16a angeordneten Tragplatten 16b untergreift, wobei die Unterseiten der Querbügelteile 16a und des Randschenkels 38 in einer Ebene liegen und somit miteinander abschließen.

Es ist außerdem vorteilhaft, der breiteren Leuchte 1 nach Fig. 1, 2 und 5 bis 10 Lichtquellen 4 größerer Lichtleistung zuzuordnen. Bei den vorliegenden Ausführungsbeispielen sind für die schmale Leuchte 1 nach Fig. 3 und 4 Leuchtstoffröhren 2a von je 28 W und für die breite Leuchte 1 Leuchstoffröhren von je 54 W vorgesehen.

Die Dicke c des Lichtleiters 3 entspricht etwa dem Durchmesser der Leuchtstoffröhren 4a und beträgt etwa 25mm. Dieser Abmessung entspricht in etwa auch die Höhe h der Tragbügel 16, die sich in der gleichen Höhenlage befinden. Bei der vorliegenden Ausgestaltung besteht die Höhe h der Querträger 16 aus den Höhenabmessungen des Lichtleiters 3, der Tragplatte 16b und des Randstegs 38.

Wie insbesondere aus Fig. 4 zu entnehmen ist, sind die im vertikalen Querschnitt U-förmigen Querbügel 16 und der Längsbügel 15 durch sich an das Deckelteil 22 anschließende Deckelteile 22a, 22b abgedeckt, die in der für das Deckelteil 22 bereits beschriebenen Weise befestigt sein können. Durch die Hohlräume der Querbügelteile 16a und Querbügel 16 und des Längsbügels 15 können sich nicht dargestellte elektrische Leitungen von den Betriebsmitteln 21 zu den Fassungen 17 erstrecken. Mit 39 ist in Fig. 1 bis 4 ein elektrisches Anschlußkabel bezeichnet, das sich durch ein Loch im Deckelteil 22 zu den Betriebsmitteln 21 erstreckt.

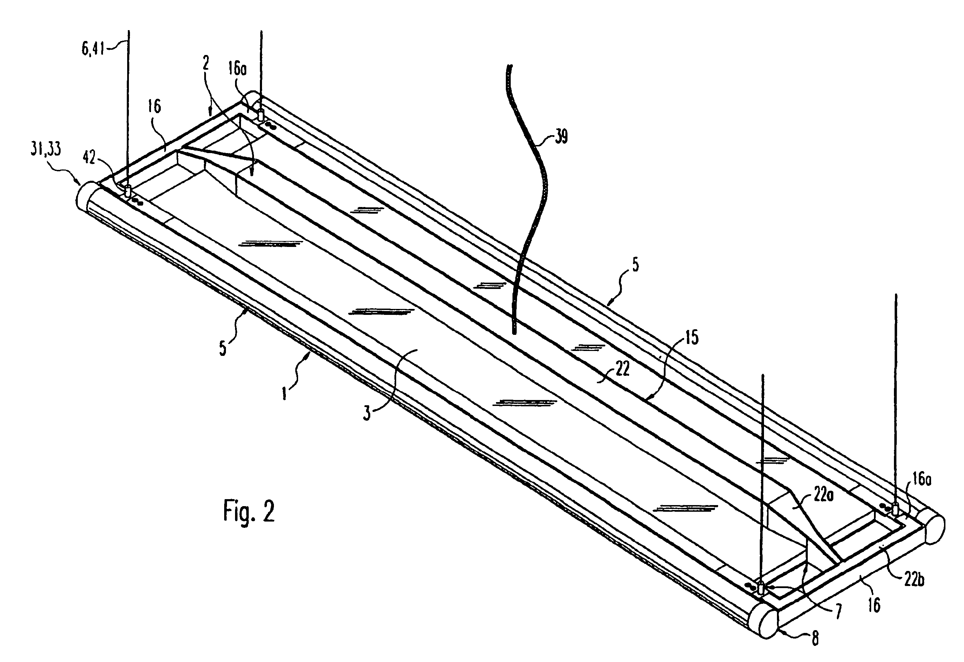

Die Haltevorrichtung 6 zum Halten der Leuchte 1 am nicht dargestellten Träger kann durch vier Stück Zugmittel 41, z.B. Zugseile, gebildet sein, die in den Endbereichen des Leuchtenträgers 2 an diesem verankert sind, z.B. an den Querbügelteilen 16a, wobei entsprechende Verankerungsmittel 42 am Leuchtenträger 2 vorgesehen sind, wie es die Fig. 2 zeigt.

Um Lichtverluste zu vermeiden, ist es vorteilhaft, die inneren, längs verlaufenden Schmalseiten 45 der Lichtleitersegmente 3a oder die Seitenflächen des vertikalen Stegs 35b der Tragschiene 35 mit einer Reflexionsschicht zu versehen, um Lichtverluste zu vermeiden. An den kurzen Schmalseiten 18b kann die zugehörige Oberfläche des Lichtleiters 3 lichtdurchlässig sein, um einen besonderen Lichteffekt zu erreichen, oder sie kann ebenfalls mit einer Reflexionsschicht zwecks Vermeidung eines Lichtaustritts beschichtet sein. Entsprechend können auch die einander zugewandten kurzen Schmalseiten 18c der Lichtleitersegmente 3a ausgebildet sein, die vorzugsweise dicht aneinander anliegen.

Es ist zur Erzeugung besonderer Lichteffekte auch vorteilhaft, den Reflektor 25 und/oder 26 aus teilweise lichtdurchlässigem oder durchscheinendem Material, insbesondere Kunststoff, zu bilden.

Der Leuchtenträger 2, der Hauptreflektor 5 mit den Endkappen 33 und der Zusatzreflektor 26 sind vorzugsweise Druckgußteile oder Spritzgießteile aus Metall oder Kunststoff, insbesondere einem Leichtmetall wie Aluminium.

## Patentansprüche

1. Deckenanbauleuchte (1) mit einer Lichtquelle (4), die an einer ersten Schmalseite (18) eines scheibenförmigen, im wesentlichen waagerecht ausgerichteten Lichtleiters (3) angeordnet ist, von dem das zur Raumbeleuchtung dienende Licht wenigstens von einem Teilbereich einer Breitseite (13) des Lichtleiters (3) abstrahlt, wobei die Leuchte (1) einen Leuchtenträger (2) mit wenigstens zwei einander gegenüberliegenden Tragelementen (16b) zur Halterung des Lichtleiters (3) aufweist, die an Tragteilen (16, 16a) angeordnet sind und den Lichtleiter (3) untergreifen, und wobei der Lichtquelle (4) eine Reflektoranordnung (5) zugeordnet ist, die am Leuchtenträger (2) gehalten ist, und die die Lichtquelle (4) im dem Lichtleiter (3) benachbarten freien Bereich wenigstens teilweise umgibt,
wobei an einer Breitseite des Lichtleiters (3) eine lichtauskoppelnde Mikrostruktur vorgesehen ist, und wobei an der dem Lichtausgang gegenüberliegenden Breitseite die zugehörige Oberfläche des Lichtleiters (3) durch Totalreflektion oder eine Reflektionsschicht lichtundurchlässig ist.

2. Deckenanbauleuchte nach Anspruch 1,
**dadurch gekennzeichnet,**
**daß** die Tragteile (16, 16a) sich in der gleichen Höhenlage befinden wie der Lichtleiter (3).

3. Deckenanbauleuchte nach Anspruch 1 oder 2,
**dadurch gekennzeichnet,**
**daß** die vertikale Abmessung (h) der Tragteile (16, 16a) der vertikalen Abmessung (c) des Lichtleiters (3) etwa entspricht oder wenigstens um die Höhenabmessung der Tragelemente (16b) größer ist.

4. Deckenanbauleuchte nach einem der vorherigen Ansprüche,
**dadurch gekennzeichnet,**
**daß** zwei Tragteile (16,16a) an den zweiten Schmalseiten (18b) angeordnet sind, die sich quer zu der ersten Schmalseite (18) erstrecken, wobei die Tragteile (16, 16a) sich über die gesamte horizontale Abmessung dieser zweiten Schmalseiten (18b) des Lichtleiters (3) erstrecken oder in den Randbereichen der ersten einander gegenüberliegenden Schmalseiten (18) des Lichtleiters (3) angeordnet sind.

5. Deckenanbauleuchte nach Anspruch 4,
**dadurch gekennzeichnet,**
**daß** die Tragelemente (16b) sich an den zweiten Schmalseiten (18b) von den Tragteilen (16,16a) zum Lichtleiter (3) erstrecken.

6. Deckenanbauleuchte nach Anspruch 4 oder 5,
**dadurch gekennzeichnet,**
**daß** der sich längs den ersten Schmalseiten (18) erstreckende Abstand zwischen den Tragteilen (16) größer ist als die zugehörige Abmessung (L) des Lichtleiters (3) und zwischen dem Lichtleiter (3) und den Tragteilen (16) freie Felder (19) vorhanden sind.

7. Deckenanbauleuchte nach einem der Ansprüche 4 bis 6,
**dadurch gekennzeichnet,**
**daß** die Reflektoranordnung (5) sich quer zu den Tragteilen (16, 16a) erstreckt und mit deren Enden verbunden ist.

8. Deckenanbauleuchte nach einem der vorherigen Ansprüche,
**dadurch gekennzeichnet,**
**daß** zwei Reflektoranordnungen (5) an zwei einander gegenüberliegenden Seiten der Leuchte (1) angeordnet sind.

9. Deckenanbauleuchte nach einem der vorherigen Ansprüche,
**dadurch gekennzeichnet,**
**daß** zwei einander gegenüberliegend angeordnete Tragteile (16) durch einen sich mittig über den Lichtleiter (3) erstreckenden Bügel (15) vorzugsweise einstückig miteinander verbunden sind.

10. Deckenanbauleuchte nach Anspruch 9,
**dadurch gekennzeichnet,**
**daß** der Bügel (15) und die Tragteile (16, 16a) Hohlschienen, vorzugsweise im Querschnitt U-förmige Teile sind, in deren Hohlraum die elektrischen Betriebsmittel (21) der Leuchte (1) und/oder sich zu der Lichtquelle (4) erstreckende elektrische Leitungen angeordnet sind.

11. Deckenanbauleuchte nach einem der vorherigen Ansprüche,
**dadurch gekennzeichnet,**
**daß** der Lichtleiter (3) aus Lichtleitersegmenten (3a) besteht, die in einer oder mehreren, längs und/oder quer zur Lichtquelle (4) verlaufenden Reihen angeordnet sind.

12. Deckenanbauleuchte nach Anspruch 11,
**dadurch gekennzeichnet,**
**daß** der Leuchtenträger (2) zwischen zwei Lichtleiterelement-Reihen eine Tragleiste (35) in der Querschnittsform eines auf dem Kopf stehenden T aufweist, wobei die einander zugewandten Ränder benachbarter Lichtleitersegmente (3a) auf den horizontalen Tragschenkeln (35a) der Tragleiste (35) aufliegen.

13. Deckenanbauleuchte nach einem der vorherigen Ansprüche,
**dadurch gekennzeichnet,**
**daß** die Reflektoranordnung (5) einen ersten Reflektor (25) aufweist, der die Lichtquelle (4) untergreift und seitlich hintergreift.

14. Deckenanbauleuchte nach Anspruch 13,
**dadurch gekennzeichnet,**
**daß** ein zweiter Reflektor (26) vorgesehen ist, der sich über der Lichtquelle (4) nach außen erstreckt und in seiner horizontalen Abmessung kürzer bemessen ist, als der erste Reflektor (25), vorzugsweise im mittleren Bereich über der Lichtquelle (4) endet.

15. Deckenanbauleuchte nach einem der vorherigen Ansprüche,
**dadurch gekennzeichnet,**
**daß** die Reflektoranordnung (5) oder der erste Reflektor (25) durch eine erste Steckverbindung (28) mit einem Steckzapfen (28a) und eine ihn aufnehmende Steckausnehmung (28b) mit dem Leuchtenträger (2) verbunden ist.

16. Deckenanbauleuchte nach Anspruch 15,
**dadurch gekennzeichnet,**
**daß** eine Sicherungsvorrichtung zum Sichern des Steckzapfens (28a) in der eingesteckten Stellung vorgesehen ist.

17. Deckenanbauleuchte nach Ansprüche 15 oder 16,
**dadurch gekennzeichnet,**
**daß** in jedem Endbereich der Reflektoranordnung (5) oder des ersten Reflektors (25) eine Steckverbindung (28) angeordnet ist.

18. Deckenanbauleuchte nach einem der Ansprüche 15 bis 17,
**dadurch gekennzeichnet,**
**daß** die Mittelachse (28c) der wenigstens einen Steckverbindung (28) horizontal verläuft.

19. Deckenanbauleuchte nach einem der Ansprüche 15 bis 18,
**dadurch gekennzeichnet,**
**daß** der Leuchtenträger (2) Tragteile (16a) in Form von Hohlschienen aufweist, deren Hohlräume die Steckausnehmungen (28b) bilden.

## Claims

1. Ceiling light fitting (1) having a light source (4) which is arranged at a first narrow side (18) of a plate-shaped, in substance horizontally directed light guide (3), from which the light serving for the room illumination is irradiated at least from a part region of a broad side (13) of the light guide (3), whereby the light fitting (1) has a light fitting carrier (2) having at least two carrier elements (16b), lying opposite one another, for holding the light guide (3), which carrier elements are arranged on carrier parts (16, 16a) and engage below the light guide (3), and whereby the light source (4) has a reflector arrangement (2) associated therewith which is held on the light fitting carrier (2) and which at least partially surrounds the light source (4) in the free region neighbouring the light guide (3),
wherein there is provided at a broad side of the light guide (3) a microstructure which couples light out, and
wherein at the broad side lying opposite the light outlet the associated surface of the light guide (3) is light impermeable due to total reflection or a reflection layer.

2. Ceiling light fitting according to claim 1,
**characterized in that**,
the carrier parts (16, 16a) are located at the same height as the light guide (3).

3. Ceiling light fitting according to claim 1 or 2,
**characterized in that**,
the vertical dimension (h) of the carrier parts (16, 16a) approximately corresponds to the vertical dimension (c) of the light guide (3), or at least is greater by the height dimension of the carrier elements (16b).

4. Ceiling light fitting according to any preceding claim,
**characterized in that**,
two carrier parts (16, 16a) are arranged at the two narrow sides (18b), which extend transversely to the first narrow side (18), the carrier parts (16, 16a) extending over the entire horizontal dimension of these two narrow sides (18b) of the light guide (3) or being arranged in the edge regions of the first mutually oppositely lying narrow sides (18) of the light guide (3).

5. Ceiling light fitting according to claim 4,
**characterized in that**,
the carrier elements (16b) extend on the two narrow sides (18b) from the carrier parts (16, 16a) to the light guide (3).

6. Ceiling light fitting according to claim 4 or 5,
**characterized in that**,
the spacing between the carrier parts (16), extending along the first narrow sides (18), is greater than the associated dimension (L) of the light guide (3) and free fields (19) are present between the light guide (3) and the carrier parts (16).

7. Ceiling light fitting according to any of claims 4 to 6,
**characterized in that**,
the reflector arrangement (5) extends transversely to the carrier parts (16, 16a) and is connected with their ends.

8. Ceiling light fitting according to any preceding claim,
**characterized in that**,
there are arranged two reflector arrangements (5) on two mutually oppositely lying sides of the light fitting (1).

9. Ceiling light fitting according to any preceding claim,
**characterized in that**,
two carrier parts (16), arranged mutually oppositely-lying, are connected with one another, preferably in one piece, by means of a stay (15) extending centrally over the light guide (3).

10. Ceiling light fitting according to claim 9,
**characterized in that**,
the stay (15) and the carrier parts (16, 16a) are hollow rails, preferably in cross-section U-shaped parts, in the hollow spaces of which the electrical operating means (21) of the light fitting (1) and/or electrical lines extending to the light source (4) are arranged.

11. Ceiling light fitting according to any preceding claim,
**characterized in that**,
the light guide (3) consists of light guide segments (3a), which are arranged in one or more rows running longitudinally and/or transversely to the light source (4).

12. Ceiling light fitting according to claim 11,
**characterized in that**,
the light fitting carrier (2) has, between two light guide element rows, a carrier strip (35) having the cross-sectional shape of an upturned T, whereby the mutually facing edges of neighbouring light guide segments (3a) lay upon the horizontal carrier limbs (35a) of the carrier strip (35).

13. Ceiling light fitting according to any preceding claim,
**characterized in that**,
the reflector arrangement (5) has a first reflector (25) which engages below and laterally behind the light source (4).

14. Ceiling light fitting according to claim 13,
**characterized in that**,
a second reflector (26) is provided which extends over the light source (4) outwardly and in its horizontal dimension is shorter than the first reflector (25), preferably ending in the middle region above the light source (4).

15. Ceiling light fitting according to any preceding claim,
**characterized in that**,
the reflector arrangement (5) or the first reflector (25) is connected with the light fitting carrier (2) by means of a first plug-in connection (28) having a plug-in pin (28a) and a plug-in recess (28b) receiving the pin.

16. Ceiling light fitting according to claim 15,
**characterized in that**,
there is provided a securing device for securing the plug-in pin (28a) in the inserted disposition.

17. Ceiling light fitting according to claim 15 or 16,
**characterized in that**,
a plug-in connection (28) is arranged in each end region of the reflector arrangement (5) or of the first reflector (25).

18. Ceiling light fitting according to any of claims 15 to 17,
**characterized in that**,
the middle axis (28c) of the at least one plug-in connection (28) runs horizontally.

19. Ceiling light fitting according to any of claims 15 to
18,
**characterized in that**,
the light fitting carrier (2) has carrier parts (16a) in the form of hollow rails, the hollow spaces of which form the plug-in recesses (28b).

## Revendications

1. Luminaire de plafond (1) comportant une source de lumière (4), qui est disposée sur un premier petit côté (18) d'un guide de lumière (3) en forme de plaque, sensiblement dirigé horizontalement, à partir duquel la lumière servant à l'éclairage de la pièce rayonne au moins à partir d'une zone partielle d'un grand côté (13) du guide de lumière (3), le luminaire (1) présentant un porte-luminaire (2) avec au moins deux éléments porteurs (16b) en regard l'un de l'autre pour la fixation du guide de lumière (3), qui sont disposés sur des parties porteuses (16,16a) et emprisonnent le guide-lumière (3) par le dessous, et un dispositif réflecteur (5) étant affecté à la source de lumière (4), qui est fixée sur le porte-luminaire (2), et qui entoure au moins partiellement la source de lumière (4) dans la zone libre contigüe au guide de lumière (3), une micro-structure de déconnexion de lumière étant prévue d'un grand côté du guide-lumière (3), la surface correspondante du guide lumière (3), du grand côté faisant face à la sortie de lumière, étant opaque par réflexion totale ou par une couche de réflexion.

2. Luminaire de plafond selon la revendication 1,
**caractérisé en ce que**
les parties porteuses (16, 16a) se trouvent à la même position de hauteur que le guide de lumière (3).

3. Luminaire de plafond selon la revendication 1 ou 2,
**caractérisé en ce que**
la dimension verticale (h) des parties porteuses (16, 16a) correspond sensiblement à la dimension verticale (c)du guide de lumière (3) ou au moins est supérieure de la dimension de hauteur des éléments porteurs (16b).

4. Luminaire de plafond selon l'une des revendications précédentes,
**caractérisé en ce que**
deux parties porteuses (16, 16a) sont disposées sur les seconds petits côtés (18b) qui s'étendent transversalement par rapport aux premiers petits côtés (18), les parties porteuses (16, 16a) s'étendent sur toute la dimension horizontale de ces seconds petits côtés (18b) du guide de lumière (3) ou sont disposées dans les zones marginales des premiers petits côtés (18) en regard l'un de l'autre, du guide de lumière (3).

5. Luminaire de plafond selon la revendication 4,
**caractérisé en ce que**
les éléments porteurs (16b) s'étendent sur les seconds petits côtés (18b) des parties porteuses (16, 16a) du guide de lumière (3).

6. Luminaire de plafond selon la revendication 4 ou 5,
**caractérisé en ce que**
La distance s'étendant le long des premiers petits côtés (18) entre les parties porteuses (16) est supérieure à la dimension correspondante (L) du guide de lumière (3), et entre le guide de lumière (3) et les parties porteuses (16) sont prévus des panneaux libres (19).

7. Luminaire de plafond selon l'une des revendications 4 à 6,
**caractérisé en ce que**
le dispositif de réflecteur (15) s'étend transversalement par rapport aux parties porteuses (16, 16a) et est relié à leurs extrémités.

8. Luminaire de plafond selon l'une des revendications précédentes,
**caractérisé en ce que**
Deux dispositifs de réflecteurs (5) sont disposés sur deux côtés en regard l'un de l'autre du luminaire (1).

9. Luminaire de plafond selon l'une des revendications précédentes,
**caractérisé en ce que**
deux parties porteuses (16) disposées en regard l'une de l'autre sont raccordées entre elles par un étrier (15) s'étendant centralement sur le guide de lumière (3), de préférence d'un seul tenant.

10. luminaire de plafond selon la revendication 9,
**caractérisé en ce que**
l'étrier (15) et les parties porteuses (16, 16a) sont des rails creux, de préférence des parties en section transversale en forme de U, dans l'espace creux desquelles sont disposés les moyens de fonctionnement électriques (21) du luminaire (1) et/ou s'étendent les conduites électriques jusqu'à la source de lumière (4).

11. Luminaire de plafond selon l'une des revendications précédentes,
**caractérisé en ce que**
Le guide de lumière (3) consiste en des segments de guide de lumière (3) qui sont disposés en une ou plusieurs rangées s'étendant longitudinalement et/ou transversalement par rapport à la source de lumière (4).

12. Luminaire de plafond selon la revendication 11,
**caractérisé en ce que**
le porte-luminaire (2) présente, entre deux rangées d'éléments de guide de lumière, une barrette porteuse (35) dont la section en coupe transversale forme un T renversé, les bords dirigés l'un vers l'autre des segments de guide de lumière contigus (3a) reposent sur des branches porteuses horizontales (35a) de la barrette porteuse (35).

13. Luminaire de plafond selon l'une des revendications précédentes,
**caractérisé en ce que**
le dispositif réflecteur (3) présente un premier réflecteur (25) qui vient emprisonner la source de lumière (4) par le dessous et latéralement par l'arrière.

14. Luminaire de plafond selon la revendication 13,
**caractérisé en ce que**
il est prévu un second réflecteur (26) qui s'étend sur la source de lumière (4) vers l'extérieur et qui est dimensionné de façon plus petite dans sa dimension horizontale que le premier réflecteur (25), et aboutit de préférence dans la zone médiane au-dessus de la source de lumière (4).

15. luminaire de plafond selon l'une des revendications précédentes,
**caractérisé en ce que**
le dispositif de réflecteur (5) ou le premier réflecteur (25) est raccordé par un premier raccord enfichable (28) à un pivot enfichable (28a) et un évidement enfichable (28b) le recevant est accordé au porte-luminaire (2).

16. Luminaire de plafond selon la revendication 15,
**caractérisé en ce que**
il est prévu un dispositif de sécurité pour fixer le pivot enfichable (28a) dans la position enfichée.

17. Luminaire de plafond selon les revendications 15 ou 16,
**caractérisé en ce que**
dans chaque zone d'extrémité du dispositif de réflecteur (5) ou du premier réflecteur (25) est disposé un raccord enfichable (28).

18. Luminaire de plafond selon l'une des revendications 15 à 17,
**caractérisé en ce que**
l'axe médian (28c) d'au moins un raccord enfichable (28) s'étend horizontalement.

19. Luminaire de plafond selon l'une des revendications 15 à 18,
**caractérisé en ce que**
le porte-luminaire (2) présente des parties porteuses (16a) sous forme de rails creux dont les espaces vides forment des évidements enfichables (28b).
